## Europäisches Patentamt
## European Patent Office
## Office européen des brevets

(19)

(11) Veröffentlichungsnummer: **0 082 307**
**B1**

(12) # EUROPÄISCHE PATENTSCHRIFT

(45) Veröffentlichungstag der Patentschrift:
**20.11.86**

(51) Int. Cl.⁴: **A 61 G 5/00**

(21) Anmeldenummer: **82110618.4**

(22) Anmeldetag: **18.11.82**

(54) **Behindertenfahrzeug.**

(30) Priorität: **20.11.81 DE 3146009**

(43) Veröffentlichungstag der Anmeldung:
**29.06.83 Patentblatt 83/26**

(45) Bekanntmachung des Hinweises auf die Patenterteilung:
**20.11.86 Patentblatt 86/47**

(84) Benannte Vertragsstaaten:
**AT BE CH FR GB IT LI NL SE**

(56) Entgegenhaltungen:
**DE - A - 2 850 755**
**DE - C - 8 388**
**DE - C - 1 258 284**
**FR - A - 2 284 481**
**FR - A - 2 315 254**
**FR - A - 2 384 657**
**FR - A - 2 423 368**
**FR - A - 2 491 408**
**US - A - 3 240 008**

(73) Patentinhaber: **ELO-MA-HG, Peter Kurs Ing. VDI Gmbh & Co, Hauptstrasse 59, D-7541 Straubenhardt 6 (DE)**

(72) Erfinder: **Kurs, Peter, Hauptstrasse 59, D-7541 Straubenhardt 6 (DE)**

(74) Vertreter: **Trappenberg, Hans, Wendtstrasse 1, D-7500 Karlsruhe 21 (DE)**

## Beschreibung

Die Erfindung betrifft ein Fahrzeug zur Beförderung eines Behinderten im Aussenbereich, der auch im Innenbereich auf die Nutzung eines manuell bewegbaren Krankenfahrstuhls angewiesen ist, wobei der Krankenfahrstuhl auf das Fahrzeug aufsetzbar und dort festzustellen ist, wozu das Fahrzeug einen absenkbaren Fahrzeugboden und eine absenkbare Ladefläche zur Aufnahme des Krankenfahrstuhls sowie eine rückseitige Auffahröffnung zum Auffahren auf die abgesenkte Ladefläche aufweist, wobei die Aufnahme des Krankenfahrstuhls diesen so positioniert, dass der Krankenfahrstuhl (11) gleichzeitig der Bedienungsplatz für das Fahrzeug ist.

Sehr viele Behinderte sind lediglich ihrer Gehfähigkeit beraubt, ohne dass jedoch ihre weiteren Fähigkeiten eingeschränkt sind. Eine grosse Behindertengruppe dieser Art wird durch Querschnittsgelähmte gestellt, deren untere Extremitäten nicht mehr dem Willen gehorchen, die jedoch durchaus in der Lage sind, mit entsprechenden Einrichtungen beispielsweise ein Fahrzeug zu führen. Auf jeden Fall sind sie in der Lage, einen Krankenfahrstuhl manuell zu bewegen, so dass sie zumindest im Innenbereich mobil sind. Im allgemeinen sind diese Art Krankenfahrstühle jedoch nicht geeignet, um im Aussenbereich, also ausserhalb von Wohnräumen beziehungsweise Arbeitsräumen benutzt zu werden. Um diese Behinderten von einem Ort zum anderen, beispielsweise von der Wohnung zur Arbeitsstätte und zurück zu bringen, sind separate omnibusähnliche Fahrzeuge bekannt, die im allgemeinen hydraulische Aufzüge aufweisen, mit denen die Behinderten mitsamt ihrem Krankenfahrstuhl auf die Fahrzeugbodenhöhe hochgehievt und innerhalb des Fahrzeuges festgesetzt werden. Eine individuelle Mobilisierung des Behinderten ist damit allerdings nicht möglich.

Bekannt sind auch Behinderte, die weitere körperliche Schäden aufweisen, trotz dieser körperlichen Behinderung jedoch in der Lage wären, ein Fahrzeug zu führen. Hingewiesen sei in diesem Zusammenhang auf die contergangeschädigten Menschen, die zwar körperliche Anomalitäten aufweisen, deren Intellekt jedoch nicht geschädigt ist. Diese Behinderten sind im allgemeinen nicht in der Lage, einen Krankenfahrstuhl manuell zu bewegen, sondern es muss ihnen ein Krankenfahrstuhl zur Verfügung gestellt werden, der durch eine Hilfskraft bewegt wird. Diese Hilfskraft ist im allgemeinen, soweit keine Pflegeperson zur Verfügung steht, ein batteriebetriebener Elektromotor, der im Krankenfahrstuhl eingebaut ist. Auch mit diesen motorgetriebenen Krankenfahrstühlen ist jedoch lediglich eine Mobilisierung im Innenbereich möglich. Auch diese Behinderten sind damit auf spezielle Fahrzeuge zum Transport von Behinderten auf Rollstühlen angewiesen, können sich also nicht individuell im Aussenbereich bewegen. Schliesslich gibt es noch eine Gruppe von Behinderten, die sich lediglich schwerfällig bewegen, also am Stock oder an Krücken gehen können. Ist ihnen im Innenbereich auch eine mühsame Bewegung möglich, so sind sie doch im Aussenbereich im allgemeinen auf die Hilfe von Pflegepersonen angewiesen. Hier gibt es allerdings in neuerer Zeit motorgetriebene Behindertenfahrzeuge, wodurch diese geringer Behinderten auch im Aussenbereich nicht mehr auf Pflegepersonen angewiesen sind, sondern sich durchaus individuell bewegen können.

Die Erfindung beschäftigt sich mit dem Transport von Behinderten der ersten beiden Kategorien, die also zu ihrer Mobilisierung schon im Innenbereich auf die Benutzung eines im allgemeinen manuell antreibbaren Krankenfahrstuhles angewiesen sind. Die Erfindung will eine Möglichkeit angeben, wie diese Behinderten auch im Aussenbereich individuell mobilisiert werden können, so, dass sie nicht auf die Unterstützung von Pflegepersonen oder auf den Einsatz von omnibusartigen Spezialfahrzeugen angewiesen sind.

Ausser der beschriebenen Möglichkeit mit Hilfe eines speziellen omnibusartigen Fahrzeuges zur Beförderung dieser Behinderten, bestand selbstverständlich bisher auch die Möglichkeit, die Behinderten aus ihrem Rollstuhl in ein individuelles Fahrzeug zu tragen, so dass sie mit diesem Fahrzeug wegfahren konnten. Am Ankunftsort allerdings musste der Behinderte wieder aus dem Spezialfahrzeug herausgetragen und in einen dort befindlichen Rollstuhl gesetzt werden. Der Behinderte war also immer auf die Hilfe von Pflegepersonal, wie auch darauf angewiesen, dass jeweils am Ankunftsort ein Krankenfahrstuhl vorhanden war. Nach der DE-A-2 850 755 weiter bekannt ist auch ein als Selbstfahrer ausgebildeter Krankenfahrstuhl, der im wesentlichen aus einem Sitz mit Rückenlehne auf einem Dreirad-Fahrgestellrahmen mit elektrischem Antriebsaggregat besteht, bei dem der Dreirad-Fahrgestellrahmen zwei vordere schwenkbare Lenkräder und ein hinteres nicht schwenkbares Antriebsrad aufweist und der Sitz oberhalb des Antriebsrades angebracht ist. Dieser als Selbstfahrer ausgebildete Krankenfahrstuhl kann von Behinderten benutzt werden, die selbst auf das Fahrzeug aufsteigen und sich in Fahrposition bringen können. Um den Behinderten auch zu ermöglichen, mit ihrem eigenen individuellen, manuell bewegbaren Krankenfahrstuhl diesen Selbstfahrer zu benutzen, wurde bereits vorgeschlagen, eine Vorrichtung vorzusehen, um mit diesem eigenen Krankenfahrstuhl auf den Sitz des Selbstfahrers aufzufahren und den Krankenfahrstuhl in dieser Lage festzustellen.

So gut und einfach diese Idee war, hat sich im praktischen Betrieb gezeigt, dass die Behinderten beim Fahren, sitzend auf dem aufgeschobenen Krankenfahrstuhl, ein solch starkes Unsicherheitsgefühl überfällt, dass sie fast stets die Benützung dieses Transportmittels ablehnen. Dies rührt nicht nur daher, dass die Behinderten im Freien sitzen und dem Fahrtwind ausgesetzt sind, sondern insbesondere, dass die Auflage des individuellen Krankenfahrstuhles auf dem einen hinteren Antriebsrad durch die notwendige Federung verhältnismässig instabil ist. Diese instabile Befestigung bewirkt ein, wenn auch geringfügiges, Kippen des Krankenfahrstuhles, das durchaus noch innerhalb der vorgesehenen Federung des Selbstfahrers liegt und daher keinesfalls gefährlich ist, das aber eben die oben beschriebenen Unsicherheitsgefühle hervorruft. Um auch diesen Behinderten zur Mobilisierung zu verhelfen, wird nach der Erfindung ein spezielles stabiles, also zumindest zwei seitlich angeordnete Hinterräder aufweisendes Fahrzeug vorgeschlagen, in das der Behinderte mitsamt seinem Krankenfahrstuhl einfahren und sodann dieses Fahrzeug aufgrund seiner ihm verbliebenen Fähigkeiten nach seinen Wünschen individuell bewegen kann. Am Ankunftsort kann er dieses Fahrzeug wieder selbständig, ohne jegliche weitere Hilfe verlassen und sich somit vollkommen individuell bewegen. Hierzu muss allerdings das erfindungsgemässe Fahrzeug auch so ausgestattet sein, dass der Behinderte trotz seiner Behinderung unschwer in das Fahrzeug einfahren beziehungsweise auffahren kann und dass er dort mitsamt seinem Krankenfahrstuhl so positioniert wird, dass ihm unschwer eine Bedienung dieses speziellen Fahrzeuges möglich ist. Dieses unschwere Einfahren ist jedoch bei Fahrzeugen mit zwei seitlichen Hinterrädern, bedingt durch die, diese Räder verbindende Achse, sowie dem geschlossenen Fahrgestellrahmen nicht möglich.

Gelöst wird die gestellte Aufgabe in erfindungsgemässer Weise dadurch, dass das Fahrgestell des Fahrzeugs U-förmig, rückseitig offen, ausgebildet ist und an seinen freien Schenkeln je ein Fahrzeugrad trägt, dass der die Ladefläche bildende Fahrzeugboden zwischen diesen freien Schenkeln absenkbar angeordnet ist, dass die Auffahröffnung durch eine am Fahrzeugboden verschwenkbar angelenkte Klappe verschliessbar ist, und dass der Krankenfahrstuhl zwischen der verschlossenen Klappe und einem bei der Fahrzeugboden-Vorderkante am Fahrgestell angelenkten, auf der Ladefläche aufliegenden Winkelblech festgestellt ist. Nunmehr kann der Behinderte mit seinem Krankenfahrstuhl über die rückseitige Auffahröffnung auf die abgesenkte Ladefläche (den abgesenkten Fahrzeugboden) - manuell oder motor getrieben - geradlinig auffahren, was ihm durch die besondere erfindungsgemässe Konstruktion aus eigener Kraft, also ohne die Hilfe einer weiteren Person, möglich ist. Nach dem Auffahren auf die Ladefläche wird die Auffahröffnung durch die am Fahrzeugboden verschwenkbar angelenkte Klappe verschlossen. Diese Klappe kann in abgesenktem Zustand als Auffahrrampe, und im hochgeklappten Zustand nicht nur als Rückwand des Fahrzeugs, sondern gleichzeitig als rückseite Arretierung des Krankenfahrstuhls dienen. Um das Auffahren auf die Ladefläche des Fahrzeuges möglichst einfach zu gestalten beziehungsweise um zu ermöglichen, dass der Behinderte mit möglichst geringem Kraftaufwand auf die Ladefläche auffahren kann, soll diese Ladefläche beziehungsweise der Fahrzeugboden möglichst tief, zweckmässigerweise bis auf Strassenniveau abgesenkt werden. Dies wird durch die besondere Ausbildung des Fahrgestells, das an der hinteren Auffahröffnung vollkommen frei ist und eine Verbindung der Achse zwischen den beiden seitlichen Hinterrädern vermeidet, möglich. Die Ladefläche beziehungsweise der Fahrzeugboden kann damit im abgesenkten Zustand auf die Fahrfläche, im allgemeinen also auf die Strasse, aufgelegt werden, so dass der Behinderte ohne Schwierigkeit mit seinem Krankenfahrstuhl über die rückseitig angeordnete Klappe in das Fahrzeug einfahren kann.

Ist der Behinderte mit seinem Krankenfahrstuhl auf die Ladefläche aufgefahren, so muss der Krankenfahrstuhl in der optimalen Stellung positioniert werden. Dies erfolgt, wie bereits erwähnt, rückseitig durch die hochgeschwenkte Klappe, die nicht nur die Auffahröffnung verschliesst und die Rückwand des Fahrzeuges bildet, sondern gleichzeitig auch die rückwärtige Arretierung für den Krankenfahrstuhl darstellt. Vorderseitig wird nach der Erfindung der Krankenfahrstuhl dadurch festgesetzt, dass bei der Fahrzeugboden-Vorderkante ein mit seiner Vorderkante am Fahrgestell verschwenkbar angelenktes Winkelblech vorgesehen ist, das an der Winkelkante über Rollen auf dem Fahrzeugboden aufliegt. Beim Einfahren des Krankenfahrstuhles verhindert das Winkelblech ein zu weites Vorrollen. Beim Anheben des Fahrzeugbodens jedoch wird das Winkelblech an seiner Winkelkante so hochgehoben, dass es an den Vorderrädern des Krankenfahrstuhls anliegt, den Krankenfahrstuhl also somit in der gewünschten Lage arretiert. Zweckmässigerweise wird hierbei als Anlenkachse für das Winkelblech ein Schwenkbolzen vorgesehen, der in Fahrzeuglängsrichtungen in einem Langloch verschieb- und feststellbar vorgesehen ist, um damit auch die verschiedenen Längsabmessungen der Krankfahrstühle berücksichtigen zu können.

Vielfach kann dem Behinderten nicht zugemutet werden, dass er manuell das Absenken und Anheben der Ladefläche bewirkt. Deshalb kann vorgesehen sein, dass die Ladefläche mittels Hydraulikzylinder oder Spindelhub-Elektromotoren absenkbar beziehungsweise anhebbar ist.

Zusammenfassend kann damit festgestellt werden, dass der Behinderte nun erstmals über ein Fahrzeug verfügt, in das er ohne Schwierigkeit und auch ohne eine helfende Person aus eigener Kraft einfahren kann und dort automatisch so festgesetzt wird, dass er dieses Fahrzeug, seinen Fähigkeiten nach, bedienen kann. Ohne dass der Behinderte also seinen eigenen, möglicherweise für ihn individuell angefertigten Krankenfahrstuhl verlassen muss, kann er das Fahrzeug nach der Erfindung in Benutzung nehmen, wird also auch im Aussenbereich mobil. Selbstverständlich wird dieses Fahrzeug Auflagen hinsichtlich insbesondere der Fahrgeschwindigkeit erfüllen müssen, jedoch ist auf alle Fälle gewährleistet, dass der Behinderte sich individuell auch im Aussenbereich bewegen kann.

Auf der Zeichnung ist das Fahrzeug nach der Erfindung schematisch dargestellt, und zwar zeigen:

Fig. 1 einen Längsschnitt nach C-D der Fig. 4,
Fig. 2 einen gleichen Längsschnitt nach A-B der Fig. 4,
Fig. 3 eine Rückansicht,
Fig. 4 eine Draufsicht nach der Schnittlinie E-F der Fig. 1 und
Fig. 5 bis
Fig. 7 drei Phasen des Anhebens der Ladefläche.

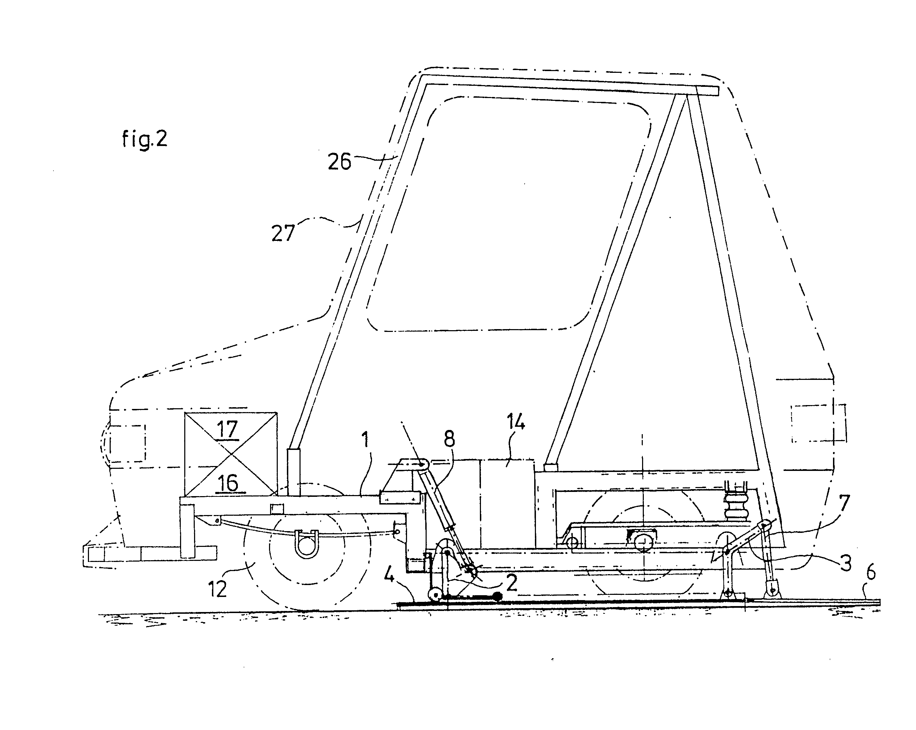

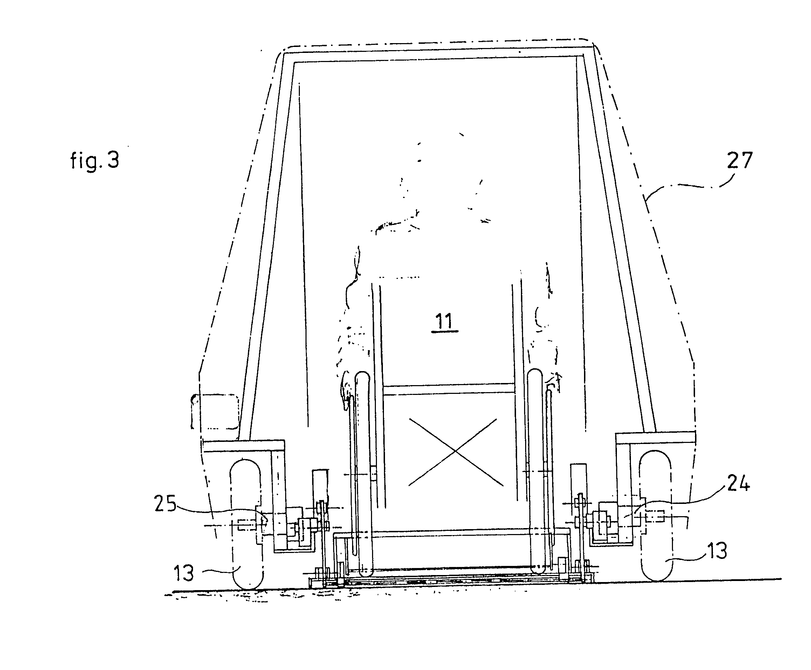

An einem Fahrgestellrahmen 1 ist über Winkelhebel 2, 3 eine Ladefläche 4, die gleichzeitig den Fahrzeugboden bildet, angelenkt. Über ein hinteres querliegendes Gelenk 5 sowie über einen weiteren Hebel 7 ist eine Klappe 6 an dieser Ladefläche 4 angelenkt. An dem vorderen Winkelhebel 2 greift ein Hydraulikzylinder 8 an, mit dem diese Ladefläche 4 auf- und abgesenkt und gleichzeitig aber das Hebelsystem auch die Klappe 6 ebenfalls als Auffahrrampe abgesenkt werden kann. Mit seiner Vorderkante ebenfalls am Fahrgestellrahmen 1 angelenkt ist ein Winkelblech 9, das an seiner Winkelkante Rollen 10 aufweist. In der abgesenkten Stellung der Ladefläche 4 liegt dieses Winkelblech 9 mit seinem langen Schenkel auf der Ladefläche 4 auf (siehe Fig. 2). Dadurch wird eine vordere Begrenzungskante geschaffen, um ein zu weites Vorrollen eines Krankenfahrstuhles 11 (Fig. 3) zu vermeiden. In der angehobenen Stellung der Ladeklappe 4 hingegen wird der lange Schenkel des Winkelblechs hochgedrückt und legt sich vor die Vorderräder dieses Krankenfahrstuhles 11, ihn hiermit in der optimalen Position feststellend.

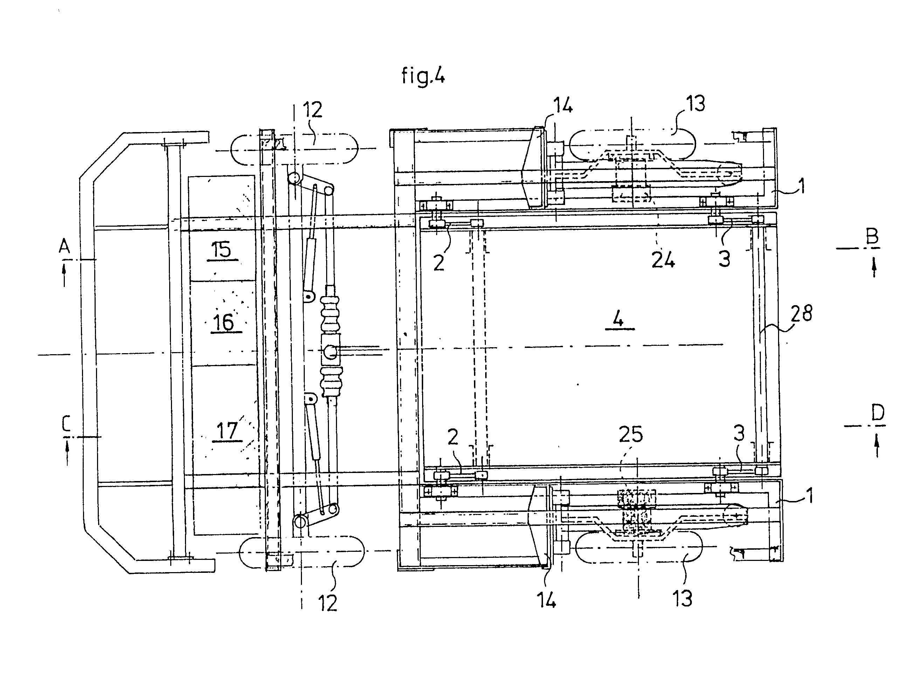

Wie aus Fig. 4 ersichtlich ist, ist der Fahrgestellrahmen 1 U-förmig ausgebildet, also an der Rückseite offen. An dieser offenen Seite wird der Fahrgestellrahmen 1 allerdings stabilisiert durch eine durchgehende Achse 28, die mit Hebeln 3 an der Ladefläche 4 und am Fahrgestellrahmen 1 gelagert ist.

Zwischen der Vorder- und Hinterrädern 13 sind auf dem Fahrgestellrahmen 1 Batterien 14 untergebracht. Sie dienen zum Antrieb eines Elektromotors 15, der eine Hydraulikpumpe 16 antreibt. Der Elektromotor 15 sowie die Hydraulikpumpe 16 sind zusammen mit einem Verbrennungsmotor 17 an der Frontseite des Fahrzeugs untergebracht. Die Steuerung der Hydraulikpumpe 16 und/oder des Elektromotors 15 und/oder des Verbrennungsmotors 17 erfolgt über einen Fahrt-Stellhebel 18, der in der Nähe des Lenkrades 19 angeordnet ist. Mittels dieses Fahrt-Stellhebels kann in Richtung des Pfeiles 20 sowohl die Vorwärtsfahrt, der Leerlauf, wie auch die Rückwärtsfahrt gesteuert werden. Dieser Fahrt-Stellhebel 18 ist zusammen mit dem Lenkrad 19 in Richtung der Pfeile 21, 22, 23 verschieb- und feststellbar, so dass stets die optimale Lage dieser Bediengeräte zum Behinderten eingestellt wird. Angetrieben wird das Fahrzeug über Hydraulikmotoren 24, 25, die parallel zusammengeschaltet sind. Durch diese Parallelschaltung kann auf ein zusätzliches Differential verzichtet werden, da der Ausgleich der unterschiedlichen Drehgeschwindigkeit der Hydraulikmotoren 24, 25 beziehungsweise der Hinterräder 13 hydraulisch erfolgt. Am Fahrgestellrahmen 1 ist ausserdem noch ein Karosserieaufbau 26 vorgesehen, der nach aussen durch eine Kunststoff-Aussenhaut 27 (strichpunktiert eingezeichnet) abgedeckt wird.

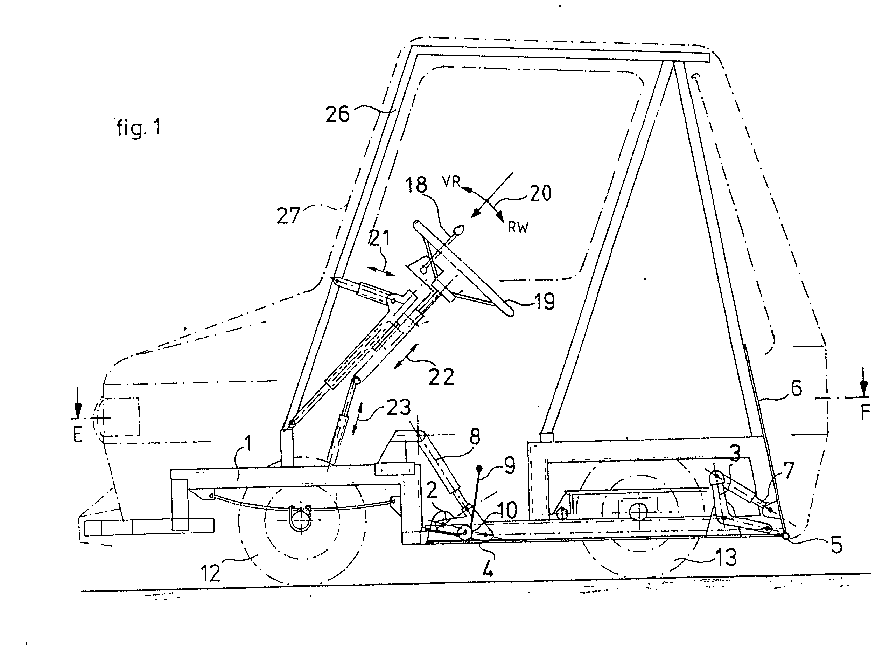

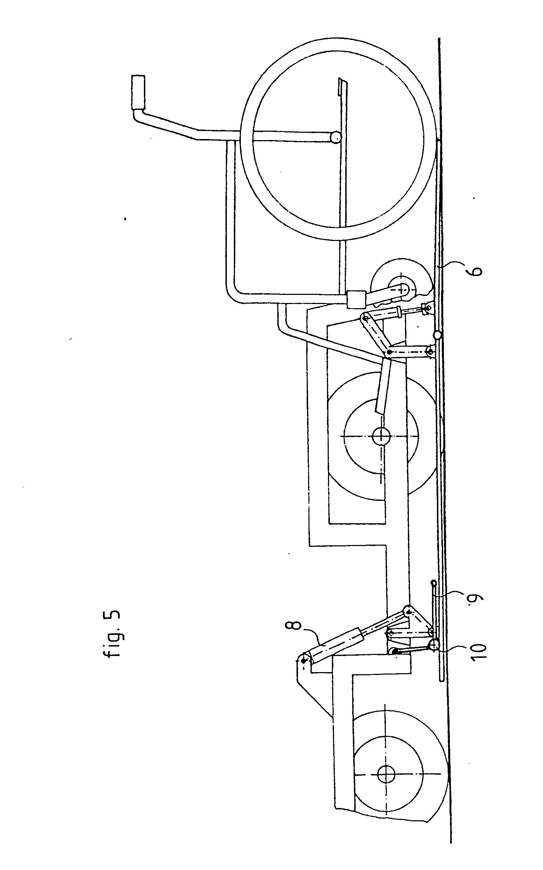

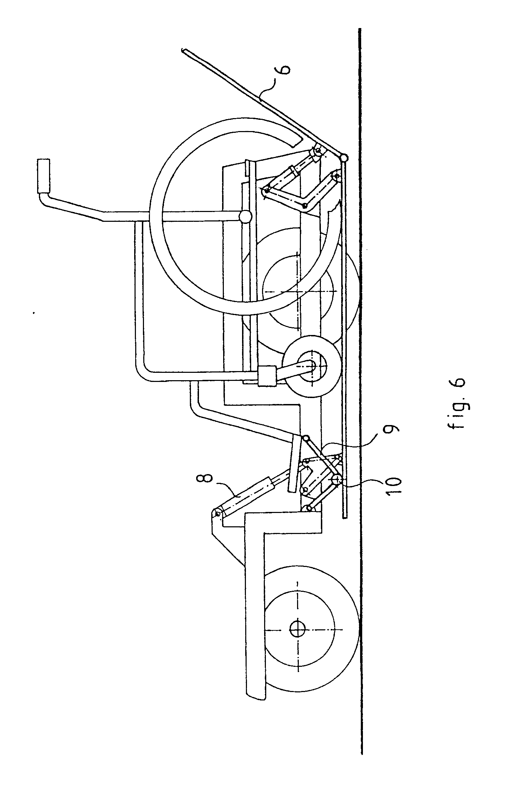

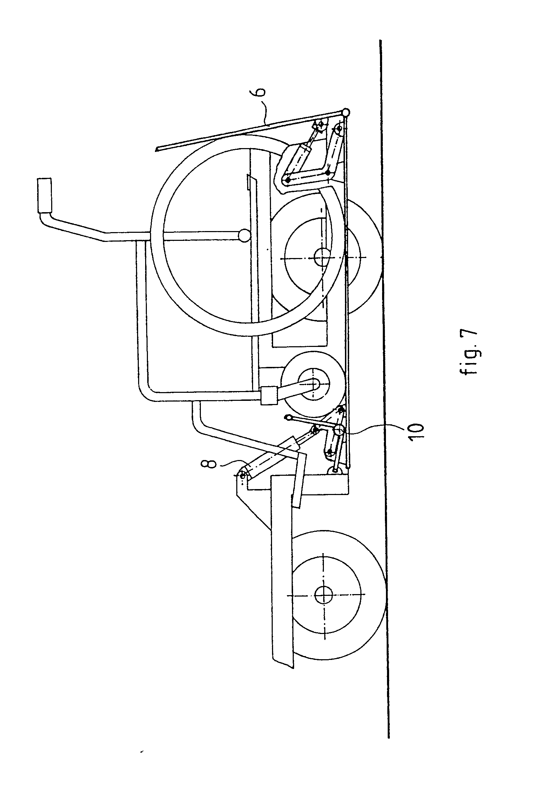

In das dargestellte Fahrzeug kann der Behinderte bei abgesenkter Ladefläche 4 und entsprechend abgesenkter Klappe 6 (Fig. 2 und Fig. 5) unschwer einfahren, bis er an den kurzen Schenkel des Winkelbleches 9 anschlägt. Nach Einschalten des Elektromotors, der seine Kraft über die Akkumulatoren 14 bezieht, steht durch die Hydraulikpumpe 16 gelieferte Druckflüssigkeit zur Verfügung, so dass mittels des Hydraulikzylinders 8 die Ladefläche in die in Fig. 1 und in Fig. 7 gezeigte Fahrtstellung angehoben werden kann. Hierbei rollt das Winkelblech 9 mittels der an der Winkelkante vorgesehenen Rollen 10 in die in Fig. 1 dargestellte Stellung vor die Vorderräder des eingefahrenen Krankenfahrstuhles. Gleichzeitig wird die Klappe 6, die bisher als Auffahrrampe diente, angehoben. Dadurch ist der eingefahrene Krankenfahrstuhl sicher zwischen seinen Vorder- und Hinterrädern positioniert, so dass der Behinderte die Bedienhebel (Fahrt-Stellhebel 18 und Lenkrad 19) ergreifen und bedienen kann. Gegebenenfalls wird er diese Bedienhebel durch die Verschiebemöglichkeiten nach den Pfeilen 21, 22, 23 solange verschieben, bis er sie optimal ergreifen und bedienen kann. Zum Fahren dient beispielsweise in Parks oder im Stadtbereich der Elektromotor, der die Hydraulikpumpe antreibt, die wiederum die Druckflüssigkeit für die Hydraulikmotoren 24, 25 zur Verfügung stellt. Gesteuert wird hierbei die Fahrtrichtung und Fahrgeschwindigkeit mittels des Fahrt-Stellhebels 18. Ausserhalb des Stadtbereichs kann über den Elektromotor 15 der Verbrennungsmotor 17 angeworfen werden, der sodann die Hydraulikpumpe 16, jedoch auch den nunmehr als Generator arbeitenden Elektromotor 15 antreibt. Da die Fahrgeschwindigkeit nach wie vor durch den Fahrt-Stellhebel 18, also durch Einstellung der Hydraulikpumpe (in Sonderfällen auch zusätzlich durch Steuerung des Elektromotors) gesteuert wird, kann der Verbrennungsmotor 17 in einem optimalen Drehzahlbereich gehalten werden, wo er nicht nur optimal Leistung abgibt, sondern auch die geringsten Schadstoffe emittiert.

Dadurch, dass die Batterien 14 im Schwerpunkt des Fahrzeuges, zwischen den Vorder- und Hinterrädern, sehr tiefliegend angeordnet sind, ist ein Kippen des Fahrzeugs praktisch ausgeschlossen.

**Patentansprüche**

1. Fahrzeug zur Beförderung eines Behinderten im Aussenbereich, der auch im Innenbereich auf die Benutzung eines manuell bewegbaren Krankenfahrstuhles (11) angewiesen ist, wobei der Krankenfahrstuhl (11) auf das Fahrzeug aufsetzbar und dort festzustellen ist, wozu das Fahrzeug einen absenkbaren Boden und eine absenkbare Ladefläche (4) zur Aufnahme des Krankenfahrstuhls (11) sowie eine rückseitige Auffahröffnung zum Auffahren auf die abgesenkte Ladefläche (4) aufweist, wobei die Aufnahme des Krankenfahrstuhls (11) diesen so positioniert, dass der Krankenfahrstuhl (11) gleichzeitig der Bedienungsplatz für das Fahrzeug ist, dadurch gekennzeichnet, dass das Fahrgestell (1) des Fahrzeugs U-förmig, rückseitig offen, ausgebildet ist und an seinen freien Schenkeln je ein Fahrzeugrad (13) trägt, dass der die Ladefläche bildende Fahrzeugboden (4) zwischen diesen freien Schenkeln absenkbar angeordnet ist, dass die Auffahröffnung durch eine am Fahrzeugboden (4) verschwenkbar angelenkte Klappe (6) verschliessbar ist, und dass der Krankenfahrstuhl (11) zwischen der verschlossenen Klappe (6) und einem bei der Fahrzeugboden-Vorderkante am Fahrgestell (1) angelenkten, auf der Ladefläche (4) aufliegenden Winkelblech (9) festgestellt ist.

2. Fahrzeug nach Anspruch 1, dadurch gekennzeichnet, dass das mit seiner Vorderkante am Fahrgestell (1) verschwenkbar angelenkte Winkelblech (9) an der Winkelkante über Rollen (10) auf dem Fahrzeugboden (4) aufliegt.

3. Fahrzeug nach Anspruch 1 oder 2, dadurch gekennzeichnet, dass an der absenkbaren Ladefläche (4) Winkelhebel (2, 3) verdrehbar angebracht sind, die einerseits mit dem Fahrgestell (1) und andererseits mit Hydraulikzylindern (7, 8) verbunden sind.

### Claims

1. A vehicle for the conveyance out of doors of a disabled person who also indoors is assigned to the use of an invalid chair (11) movable by hand, where the invalid chair (11) may be mounted on the vehicle and is to be fixed there, for which purpose the vehicle exhibits a floor which may be lowered and a loading area (4) which may be lowered for picking up the invalid chair (11) as well as a run-up opening at the rear for running up onto the lowered loading area (4), the pick-up of the invalid chair (11) so positioning it that the invalid chair (11) is at the same time the driving seat for the vehicle, characterized in that the chassis (1) of the vehicle is made U-shaped and open at the rear and carries on each of its free arms one running-wheel (13), that the floor (4) of the vehicle forming the loading area is arranged to be able to be lowered between these free arms, that the run-up opening may be closed by a flap (6) hinged pivotally from the floor (4) of the vehicle, and that the invalid chair (11) is fixed between the closed flap (6) and an angled piece of sheetmetal (9) hinged to the chassis (1) at the front edge of the vehicle floor and resting on the loading area (4).

2. A vehicle as in Claim 1, characterized in that the angled piece of sheetmetal (9) hinged pivotally by its front edge from the chassis (1) rests on the vehicle floor (4) via rollers (10) at the corner of the angle.

3. A vehicle as in Claim 1 or 2, characterized in that bellcranks (2, 3) are fitted to the lowerable loading area to be able to turn, and are connected at one end to the chassis (1) and at the other to hydraulic cylinders (7, 8).

### Revendications

1. Véhicule pour le transport, dans le région extérieure, d'un handicapé qui est obligé dans la région intérieure aussi d'utiliser un ascenseur pour malades (11) pouvant être déplacé manuellement, l'ascenseur pour malades (11) pouvant être posé sur le véhicule et y être fixé, le véhicule présentant à cet effet un fond pouvant s'abaisser et une surface de charge (4) pouvant s'abaisser, pour recevoir l'ascenseur pour malades (11) ainsi qu'une ouverture postérieure de montée pour la montée sur la surface de charge (4) abaissée, le logement de l'ascenseur pour malades (11) positionnant celui-ci de telle sorte que l'ascenseur pour malades (11) est en même temps le poste de manoeuvre du véhicule, caractérisé en ce que le châssis (1) du véhicule est en U, ouvert à l'arrière et porte sur chacune de ses ailes libres une roue de véhicule (13), en ce que le plancher (4) du véhicule, formant la surface de charge, est disposé de manière à pouvoir s'abaisser entre ces ailes libres, en ce que l'ouverture de montée peut être fermée par un volet (6) articulé de manière à pouvoir pivoter au plancher (4) du véhicule, et en ce que l'ascenseur pour malades (11) est fixé entre le volet (6) fermé et une plaque coudée (9) articulée au châssis (1) près du bord antérieur du plancher du véhicule et reposant sur la surface de charge (4).

2. Véhicule selon la revendication 1, caractérisé en ce que la plaque coulée (9) articulée au châssis (1) par son bord antérieur de manière à pouvoir pivoter repose, au bord du coude, par l'intermédiaire de galets (10), sur le plancher (4) du véhicule.

3. Véhicule selon l'une quelconque des revendications 1 et 2, caractérisé en ce que sur la surface de charge (4) pouvant s'abaisser sont disposés de manière à pouvoir tourner des leviers coudés (2, 3) qui sont reliés, d'une part, au châssis (1) et, d'autre part, à des vérins hydrauliques (7, 8).

fig. 1

VR
18    20
RW

26
27
21
19
22
6
F
E
23
8
1
9
2
3
7
10
12
4
13
5

0 082 307

fig.2

fig. 3

27

11

25

24

13

13

0 082 307

fig.4

fig. 5

fig. 6

fig. 7